# EUROPÄISCHE PATENTSCHRIFT

(11) **EP 1 197 706 B1**
(45) Veröffentlichungstag und Bekanntmachung des Hinweises auf die Patenterteilung: **31.05.2006**
(21) Anmeldenummer: 01124065.2
(22) Anmeldetag: 09.10.2001
(51) Int. Cl.: F23G 5/50

(54) **Verfahren zum Verbrennnen von Abfallprodukten**
Method of incinerating waste products
Procédé d'incinération de déchets

(30) Priorität: 12.10.2000 DE 10050575
(43) Veröffentlichungstag der Anmeldung: 17.04.2002
(73) Patentinhaber: MARTIN GmbH für Umwelt- und Energietechnik, 80807 München (DE)
(72) Erfinder: Martin, Johannes, 81929 München (DE); Spichal, Peter, 86911 Riederau (DE)
(74) Vertreter: Zmyj, Erwin

(56) Entgegenhaltungen:
- EP-A- 0 573 756
- EP-A- 0 576 955
- EP-A- 0 611 919
- EP-A- 0 754 907
- DE-A- 3 537 945
- DE-A- 4 429 958
- US-A- 5 983 811
- PATENT ABSTRACTS OF JAPAN vol. 007, no. 063 (M-200), 16. März 1983 (1983-03-16) -& JP 57 207721 A (NIPPON KOKAN KK), 20. Dezember 1982 (1982-12-20)

## Beschreibung

Die Erfindung bezieht sich auf ein Verfahren zum Verbrennen von Abfallprodukten auf einem Feuerungsrost mit Primärluftzuführung von der Unterseite des Feuerungsrostes, bei dem die Abfallprodukte zuerst getrocknet und gezündet werden, worauf der Hauptverbrennungsvorgang durchgeführt wird und danach die anfallende Schlacke ausgetragen wird.

In den vergangenen Jahren hat sich der Brennstoff Müll bzw. Abfall in seiner Zusammensetzung immer mehr dahingehend verändert, dass der Anteil an leicht flüchtigen Bestandteilen zugenommen hat, der im wesentlichen über Kunststoffe eingetragen wird. Parallel dazu nahm das Kohlenstoffangebot für die Verbrennung unmittelbar auf dem Feuerungsrost ab. Als Folge dieser Entwicklung nahm die Temperatur des Brennstoffbettes und des Schlackenbettes auf dem Feuerungsrost ebenfalls ab.

Beide Erscheinungen erschweren es, eine sehr gute Abfallschlackenausbrandqualität zu erreichen.

Durch bestimmte Maßnahmen bei der Feuerführung auf dem Feuerungsrost wird bereits versucht die Schichttemperatur auf dem Feuerungsrost wieder zu steigern. Die wichtigsten dieser Maßnahmen sind in der Senkung des Luftüberschusses bei der Primärverbrennung auf dem Feuerungsrost, der Intensivierung der Brennstoffbett-Umwälzung auf dem Feuerungsrost, z.B. durch Anheben der Rosthubzahl pro Zeiteinheit und in der Anhebung der Primärlufttemperatur zu sehen. Der Senkung des Primärluftüberschusses sind jedoch enge Grenzen gesetzt, da eine örtlich nicht mehr ausreichende Luftzuführung den Anteil an unverbrannten Feststoffen steigert. Die Anhebung der Rosthubzahl pro Zeiteinheit ist, wenn man die Transportgeschwindigkeit des Materialstromes auf dem Feuerungsrost nicht besonders stark erhöhen möchte, nur mit einem Rückschubrost möglich und kann zu einer unerwünschten Steigerung des Staubaustrages mit den Abgasen der Verbrennung führen. Das Anheben der Primärlufttemperatur kann immer dann, wenn Brennstoff-Fraktionen mit besonders hohen Heizwerten auf den Rost beschickt werden, zu unerwünscht heftigen Zündreaktionen mit der Folge einer teilweise unkontrollierten Verbrennung führen. Diese bisher angewandten Maßnahmen zur Erzielung einer besseren Schlackenqualität haben deshalb nur zu Teilerfolgen geführt.

Aus PATENT ABSTRACTS OF JAPAN vol. 007, no. 063 (M-200), 16. März 1983 & JP 57 207721 A (NIPPON KOKAN KK), 20. Dezember 1982 ist es bekannt, ein Verfahren entsprechend dem Oberbegriff des Anspruchs 1 durchzuführen und darüber hinaus noch die Verbrennungsluftmenge in pulsierender Form dem Feuerungsrost zuzuführen. Dabei wird, ausgehend von einem Normmaß, die Luftmenge erhöht und dann wieder auf das Normmaß abgesenkt.

Aufgabe der Erfindung ist es, ein Verfahren bereitzustellen, mit dessen Hilfe die Verbrennungsvorgänge auf dem Feuerungsrost so regelbar sind, dass die Qualität der anfallenden Schlacke im Hinblick auf ihre Weiterverwendung oder ihre Deponiefähigkeit verbessert wird, ohne die vorgenannten Nachteile in Kauf nehmen zu müssen.

Diese Aufgabe wird ausgehend von einem Verfahren der eingangs erläuterten Art erfindungsgemäß dadurch gelöst, dass am Ende des Hauptverbrennungsvorganges, wo noch brennbare Anteile neben sich bereits bildenden Schlackenteilen vorhanden sind, die Abbrandgeschwindigkeit bzw. Abbrandintensität in wählbaren, voneinander durch ein dazwischenliegendes Zeitintervall getrennten Zeitabschnitten unter ein Normalmaß verlangsamt und in den dazwischenliegenden Zeitabschnitten auf oder über das Normalmaß erhöht wird.

Im Verlauf des Verbrennungsvorganges gelangt das Brennbett am Ende des Hauptverbrennungsvorganges in einen Zustand, in welchem der Ausbrand des Brennstoffbettes weitgehend abgeschlossen ist und die sich bildende Schlacke abzukühlen beginnt. Dieser Übergang findet fließend statt und verändert, abhängig von der Brennstoffqualität, häufig seine Position auf dem Feuerungsrost. In diesem Bereich befinden sich Zonen mit noch ausbrennenden Abfallstoffen und bereits abkühlender Schlacke inselartig nebeneinander. Da dort die Fläche des Feuerungsrostes nicht mehr gleichmäßig mit noch abbrennendem Brennstoff bedeckt ist, nimmt die Brennbretttemperatur bereits ab und die dort anfallende Schlacke kann nicht mehr die bestmögliche Qualität erreichen.

Durch die erfindungsgemäße Maßnahme, nämlich die zeitweise Verringerung der Abbrandgeschwindigkeit bzw. Abbrandintensität in diesem fortgeschrittenen Zustand des Hauptverbrennungsvorganges wird erreicht, dass der im Brennstoff vorhandene Kohlenstoff dort langsamer verbrennt und somit sich während dieses Zeitraumes in dem Übergangsbereich zur Schlackenbildung mehr Kohlenstoff ansammelt, als wenn eine Verlangsamung der Abbrandgeschwindigkeit nicht eintreten würde. Somit ist für den darauffolgenden Zeitabschnitt, in welchem die Abbrandgeschwindigkeit bzw. Abbrandintensität wieder erhöht wird, genügend Kohlenstoff vorhanden, um die Brennbetttemperatur so weit zu erhöhen, dass die sich dabei bildende Schlacke die geforderte Qualität aufweist. Die durch diese Verfahrensweise erreichten Brennbetttemperaturen liegen höher als diejenigen Brennbetttemperaturen, die bei gleichmäßigem Betrieb des Verbrennungsablaufes wegen des mangelhaften Kohlenstoffangebots in dem Übergangsbereich des Feuerungsrostes erreicht werden können.

Durch die erfindungsgemäße Verfahrensweise wird erreicht, dass am Ende des Hauptverbrennungsvorganges die Brennbetttemperatur möglichst hoch ist, möglichst stabil ist und über die Fläche, auf welcher der Hauptverbrennungsvorgang in seiner Intensität nachläßt, möglichst gleichmäßig verteilt ist.

Dies sind die wesentlichsten Voraussetzungen, die angestrebt werden müssen, um eine gute Schlackenqualität zu erreichen und die durch das erfindungsgemäße Verfahren erfüllt werden, da durch die wiederkehrende Variation der Abbrandgeschwindigkeit bzw. Abbrandintensität wiederkehrend eine erhöhte Ansammlung von Kohlenstoff durch die Verringerung der Abbrandgeschwindigkeit bzw. Abbrandintensität erfolgt und eine an diesen Vorgang ausschließende Temperaturerhöhung durch die Steigerung der Abbrandgeschwindigkeit bzw. Abbrandintensität in demjenigen Bereich erzielt wird, in welchem bisher durch die veränderte Qualität des Brennstoffes die Brennbetttemperatur zur Bildung der gewünschten Schlackenqualität nicht mehr ausreichte. Es findet somit eine wiederkehrende Anreicherung von kohlenstoffreichem Brennmaterial in dem Bereich statt, der bisher von einer zu niedrigen Brennbetttemperatur geprägt war, um durch ein Verbrennen dieses wiederkehrend erhöhten Kohlenstoffanteils die Brennbetttemperatur im Bereich der Schlackenbildung zu erhöhen und auch zu stabilisieren sowie gleichmäßig zu verteilen.

Eine bevorzugte Maßnahme nach der Erfindung besteht darin, dass die Verlangsamung und Beschleunigung der Abbrandgeschwindigkeit bzw. Abbrandintensität am Ende des Hauptverbrennungsvorganges durch wiederkehrende Variation der Primärluftmenge in dem für die Schlackenqualität entscheidenden Abbrandstadium in den jeweiligen Zeitabschnitten erfolgt.

Die Variation der Primärluftmenge kann durch Absenken der Primärluftmenge unter ein Normalmaß und anschließendes Erhöhen der Primärluftmenge auf das Normalmaß erfolgen. Obwohl für die Erhöhung der Abbrandgeschwindigkeit die Primärluftmenge vorzugsweise auf das übliche Normalmaß wieder erhöht wird, wird die Abbrandgeschwindigkeit bzw. Abbrandintensität wegen des angesammelten, erhöhten Kohlenstoffgehaltes gesteigert. Eine Erhöhung der Primärluftmenge über das Normalmaß ist dabei in den meisten Fällen nicht erforderlich. Ein besonders günstiger Verfahrensablauf wird dadurch erreicht, dass die Zeitabschnitte mit mengenmäßig abgesenkter Primärluftmenge und die Zeitabschnitte mit für diesen Feuerungsrostbereich normalen Primärluftmenge in einem wählbaren Verhältnis zueinander ständig abwechseln. Vorzugsweise stehen die beiden Zeitabschnitte im Verhältnis 1:1.

Die angestrebte Kohlenstoffanreicherung im Brennstoffbett am Ende des Hauptverbrennungsvorganges hängt außer von der Absenkung der Abbrandintensität bzw. Abbrandgeschwindigkeit und somit beispielsweise von der Primärluftmengenabsenkung auch wesentlich von der Rostbewegung, d.h. von dem Brennstoffnachschub und der Brennstofftransportgeschwindigkeit, ab. Es ist deshalb vorteilhaft, wenn der Zeitabschnitt mit verringerter Abbrandintensität bzw. abgesenkter Primärluftmenge in einem vorwählbaren Verhältnis zur Zahl von Rostdoppelhüben steht. Zur Beeinflussung der gewünschten Kohlenstoffanreicherung ist es auch vorteilhaft, wenn die Anzahl der Rostdoppelhübe je Zeitabschnitt regelbar ist.

In der Praxis hat sich als vorteilhaft herausgestellt, wenn ein Zeitabschnitt der verringerten Abbrandintensität bzw. abgesenkten Primärluftmenge 3 bis 6 Minuten beträgt. Dabei ist es zweckmäßig, wenn die reduzierte Primärluftmenge 50 bis 70% der normalen Primärluftmenge beträgt. Eine vorteilhafte Weiterbildung der Erfindung besteht darin, dass die Variation der Primärluftmenge am Ende des Hauptverbrennungsvorganges bezogen auf den gesamten Verbrennungsvorgang mengenneutral ist, d.h. die Gesamtmenge der Primärluft wird durch die erfindungsgemäße Verfahrensweise gegenüber einem bisherigen Normalbetrieb im wesentlichen nicht geändert.

Das angestrebte Ziel der Verbesserung der Schlackenqualität wird auch dadurch günstig beeinflusst, dass die Primärlufttemperatur gegenüber der Umgebungslufttemperatur erhöht wird. Vorzugsweise wird die Primärlufttemperatur im Bereich von 110°C bis 180°C geregelt.

Die Änderung der Abbrandgeschwindigkeit bzw. der Abbrandintensität kann auch durch Variation des O₂-Gehaltes der Primärluft erfolgen. Dabei ist es vorteilhaft, wenn die Variation des O₂-Gehaltes der Primärluft bei gleichbleibendem Massenstrom der Primärluft erfolgt.

In vorteilhafter Weise kann die Erhöhung des O₂-Gehaltes gegenüber demjenigen der Umgebungsluft durch Zuführung von reinem Sauerstoff zur Primärluft erfolgen. Entsprechend kann die Absenkung des O₂-Gehaltes gegenüber demjenigen der Umgebungsluft durch Zuführung von Stickstoff zur Primärluft erfolgen. Die Absenkung des O₂-Gehaltes gegenüber demjenigen der Umgebungsluft kann auch durch Zuführung von rezirkuliertem Abgas zur Primärluft erfolgen.

Die Erfindung wird nachstehend anhand verschiedener Diagramme in Verbindung mit den dazugehörigen Versuchsergebnissen beispielsweise erläutert. In der beigefügten Zeichnung zeigen:

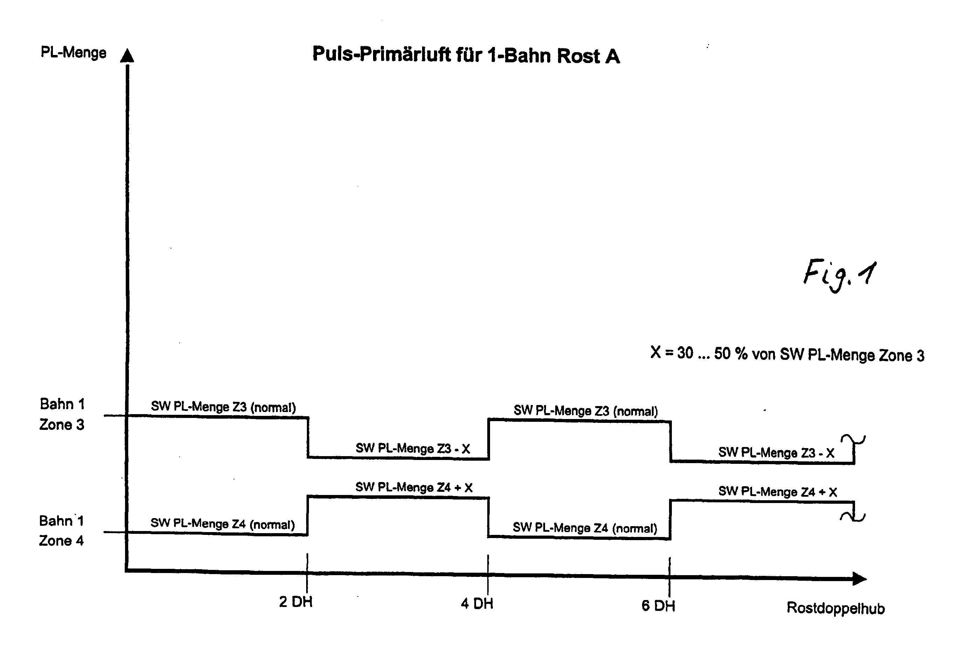

- **Figur 1:**: ein Diagramm betreffend die Abhängigkeit der Primärluftmenge von der Anzahl der Rostdoppelhübe für einen 1-Bahn-Feuerungsrost mit fünf Primärluftzonen;

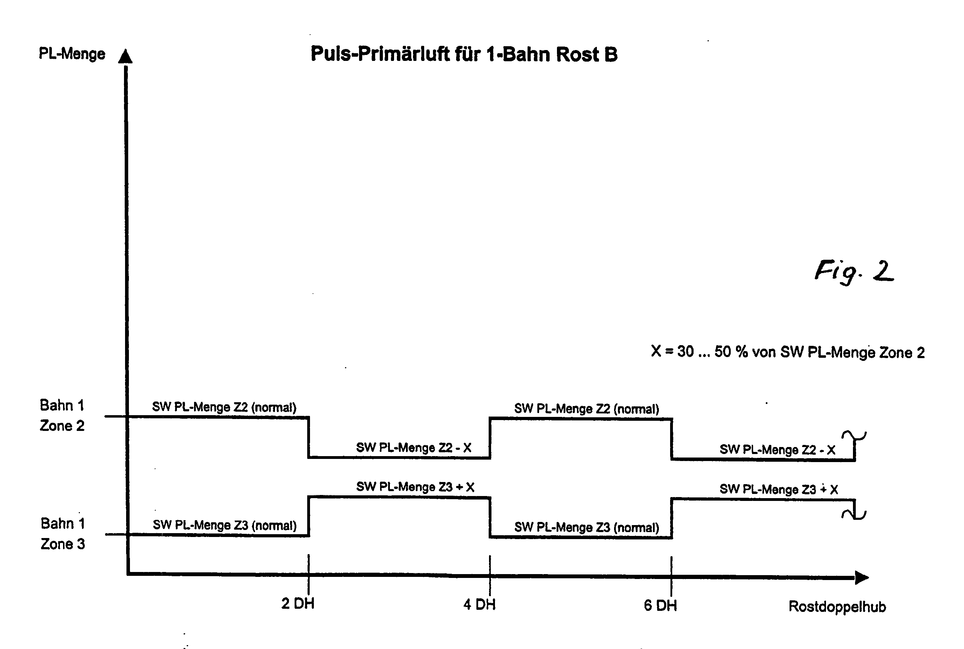

- **Figur 2:**: ein der Figur 1 entsprechendes Diagramm für einen 1-Bahn-Feuerungsrost mit drei Primärluftzonen; und

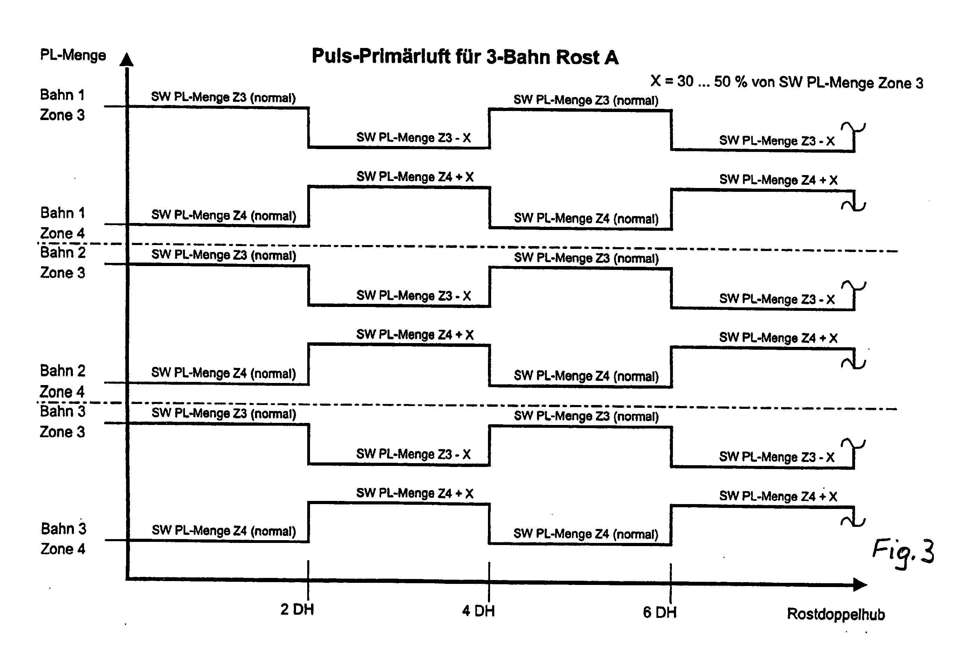

- **Figur 3:**: ein Diagramm für einen 3-Bahn-Feuerungsrost mit fünf Primärluftzonen.

Der in den Zeichnungen mit dem Buchstaben A bezeichnete Rost ist jeweils ein Rost mit fünf Primärluftzonen und der mit B bezeichnete Rost ist ein Rost mit drei Primärluftzonen.

Für alle Versuche wurden folgende Parameter konstant gehalten:
- die thermische Leistung 98,8 ± 0,7%
- der Heizwert der Abfallstoffe 2350 ± 6% kcal/kg
- die Primärluftverteilung unter dem Feuerungsrost.

Folgende Parameter wurden verändert:
- die Primärlufttemperatur (ca. 125°C und 160°C)
- der O₂(feucht)-Sollwert (6,4 Vol.-% und 7,0 Vol.-%).

Weitere Details sind in der nachfolgenden Übersichtstabelle enthalten.

Beobachtungen während des Betriebes mit pulsierender Primärluft:
- Im Bereich der Primärluftzone 3 von insgesamt fünf Primärluftzonen begann die Schlacke stellenweise dunkelrot zu glühen und es bildeten sich kleine bis mittelgroße Schlackenschollen. Der Feuerungsrost wälzte diese Schlackenschollen sehr gut um.
- Am Entschlackerabwurf trat jetzt granulatartige Schlacke aus, während vorher ohne pulsierende Primärluft die Schlacke erdig und feinkörnig war.
- Der Schlackentransport auf der dem Entschlacker nachgeordneten Schüttelrinne beschleunigte sich und wurde geräuschvoller. Die Schüttelrinne reinigte sich völlig ab. Vorher war stellenweise ein sandiger Belag angeklebt.

Die nachfolgenden beiden Versuchsreihen verdeutlichen die Verbesserung der Schlackenqualität bei dem Verfahren nach der Erfindung.

### I. Versuche mit pulsierender Primärluft:

| **O**_{**2**}**(feucht) Vol.-%** | **PL-Temp. °C** | **Glühverlust Gew.-%** | **TOC Gew.-%** | **DOC g/kg** |
|---|---|---|---|---|
| 6,4 | 160 | 1,54 | 0,62 | 0,576 |
| 6,4 | 160 | 1,82 | 1,27 | 0,591 |
| 6,4 | 129 | 1,89 | 1,40 | 0,786 |
| 7,0 | 160 | 1,45 | 1,31 | 0,642 |
| Mittelwerte: | | 1,68 | 1,15 | 0,649 |

### II. Versuche ohne pulsierende Primärluft:

| **O**_{**2**}**(feucht) Vol.-%** | **PL-Temp. °C** | **Glühverlust Gew.-%** | **TOC Gew.-%** | **DOC g/kg** |
|---|---|---|---|---|
| 6,4 | 121 | 2,19 | 4,49 | 1,011 |
| 6,3 | 160 | 2,04 | 3,45 | 0,711 |
| 6,5 | 160 | 2,39 | 2,30 | 0,726 |
| 7,0 | 160 | 2,24 | 1,49 | 1,479 |
| Mittelwerte: | | 2,22 | 2,93 | 0,982 |

Durch Verwendung von pulsierender Primärluft wurden als Mittelwert aus je vier Versuchen folgende Verbesserungen der Schlackenqualität erreicht:
Mittlerer Glühverlust wurde von 2,22 Gew.-% auf 1,68 Gew.-% abgesenkt, woraus sich eine Verbesserung um 24% ergab.
Mittlerer TOC wurde von 2,93 Gew.-% auf 1,15 Gew.-% abgesenkt, woraus sich eine Verbesserung um 61% ergab.
Mittlerer DOC wurde von 982 mg/kg auf 649 mg/kg abgesenkt, woraus sich eine Verbesserung um 34% ergab.

Bei den Versuchen wurde durch die Verwendung der pulsierenden Primärluft die Flugaschemenge pro Tonne Abfallstoff im Mittelwert über jeweils drei Versuche gegenüber den Versuchen ohne pulsierende Primärluft im Mittel von 7,5kg auf 6,2kg je 1000kg Anfangsmaterial der Abfallstoffe reduziert, woraus sich eine Verminderung um rund 17% ergibt.

Die verwendeten Abkürzungen sind nachfolgend erläutert:
- **O**_{**2**}**(feucht)** =: Sauerstoffkonzentration bezogen auf das feuchte Gasgemisch
- **PL** =: Primärluft
- **SW** =: Sollwert
- **TOC** =: Total Organic Carbon
- **DOC** =: Dilluable Organic Carbon
- **DH** =: Doppelhub

Der Betrieb mit der abwechselnd veränderten Primärluft, d.h. mit der pulsierenden Primärluft kam nur im Bereich der Roststufen 5 bis 8 zur Anwendung. Bei dem Rosttyp A entspricht dies der Primärluftzone 3.

Für die Roststufen 5 bis 8 wurde bei den Versuchen während 50% der Zeit die normale Menge der Primärluft eingesetzt, während für die übrigen 50% der Zeit die Primärluftmenge um 30 bis 50% reduziert wurde.

Die pulsierende Primärluft wird für die gesamte Primärluftmenge einer Feuerung mengenneutral ausgeführt.

Deshalb wird
- bei Rosten mit gerader Rostbahnzahl wird die Primärluft wie folgt hin und her umverteilt:
   - 2-Bahn-Feuerungsrost: Zone 3 links ←→ Zone 3 rechts
   - 4-Bahn-Feuerungsrost: Bahn 1 Zone 3 ←→ Bahn 2 Zone 3
   Bahn 3 Zone 3 ←→ Bahn 4 Zone 3
   - 6-Bahn-Feuerungsrost: Bahn 1 Zone 3 ←→ Bahn 2 Zone 3
   Bahn 3 Zone 3 ←→ Bahn 4 Zone 3
   Bahn 5 Zone 3 ←→ Bahn 6 Zone 3
- bei Rosten Typ A mit ungerader Rostbahnzahl die Primärluft zwischen den Zonen3 und 4 der gleichen Rostbahn hin und her umverteilt
- bei Rosten Typ B die Primärluft zwischen den Rostzonen 2 und 3 hin und her umverteilt.

Der Zeittakt der pulsierenden Primärluft wird vom Ablauf vollständiger Rostdoppelhübe abhängig gemacht:
- Während 2 Rostdoppelhüben erhalten die Roststufen 5-8 die normale Primärluftmenge.
- Während der darauf folgenden 2 Rostdoppelhübe erhalten die Roststufen 5-8 die reduzierte Primärluftmenge.
   Dabei erfolgt die Primärluftmengeneinspeisung der betroffenen Primärluftzonen wie weiter oben beschrieben im Gegentakt.

Eine wesentliche Voraussetzung für die gute Funktion der pulsierenden Primärluft ist es, dass die zeitgleich, aber im Gegentakt angesteuerten Primärluftklappenpaare ihre Sollwerte in der gleichen Zeit erreichen. Dies ist besonders zu beachten, wenn die Zonen 3 und 4 bei Feuerungsrost A oder die Zonen 2 und 3 bei Feuerungsrost B zeitgleich arbeiten müssen.

## Patentansprüche

1. Verfahren zum Verbrennen von Abfallprodukten auf einem Feuerungsrost mit Primärluftzuführung von der Unterseite des Feuerungsrostes, bei dem die Abfallprodukte zuerst getrocknet und gezündet werden, worauf der Hauptverbrennungsvorgang durchgeführt wird und danach die anfallende Schlacke ausgetragen wird, **dadurch gekennzeichnet, dass** am Ende des Hauptverbrennungsvorganges, wo noch brennbare Anteile neben sich bereits bildenden Schlackenteilen vorhanden sind, die Abbrandgeschwindigkeit bzw. Abbrandintensität in wählbaren, voneinander durch ein dazwischenliegendes Zeitintervall getrennten Zeitabschnitten unter ein Normalmaß verlangsamt und in den dazwischenliegenden Zeitabschnitten auf oder über das Normalmaß erhöht wird.

2. Verfahren nach Anspruch 1, **dadurch gekennzeichnet, dass** die Verlangsamung und Beschleunigung der Abbrandgeschwindigkeit bzw. Abbrandintensität am Ende des Hauptverbrennungsvorganges durch wiederkehrende Variation der Primärluftmenge in dem für die Schlackenqualität entscheidenden Abbrandstadium in den jeweiligen Zeitabschnitten erfolgt.

3. Verfahren nach Anspruch 2, **dadurch gekennzeichnet, dass** die Zeitabschnitte mit abgesenkter Primärluftmenge und die Zeitabschnitte mit für diesen Feuerungsbereich normalen Primärluftmenge in einem wählbaren Verhältnis zueinander ständig abwechseln.

4. Verfahren nach Anspruch 3, **dadurch gekennzeichnet, dass** die beiden Zeitabschnitte im Verhältnis 1:1 stehen.

5. Verfahren nach einem der Ansprüche 1 bis 4, **dadurch gekennzeichnet, dass** der Zeitabschnitt mit verringerter Abbrandintensität bzw. abgesenkter Primärluftmenge in einem vorwählbaren Verhältnis zur Zahl von Rostdoppelhüben steht.

6. Verfahren nach Anspruch 5, **dadurch gekennzeichnet, dass** die Anzahl der Rostdoppelhübe je Zeitabschnitt regelbar ist.

7. Verfahren nach einem der Ansprüche 1 bis 6, **dadurch gekennzeichnet, dass** ein Zeitabschnitt der verringerten Abbrandintensität bzw. der abgesenkten Primärluftmenge 3 bis 6 Minuten beträgt.

8. Verfahren nach einem der Ansprüche 2 bis 7, **dadurch gekennzeichnet, dass** die reduzierte Primärluftmenge 50 bis 70% der normalen Primärluftmenge beträgt.

9. Verfahren nach einem der Ansprüche 2 bis 8, **dadurch gekennzeichnet, dass** die Variation der Primärluftmenge am Ende des Hauptverbrennungsvorganges bezogen auf den gesamten Verbrennungsvorgang mengenneutral ist.

10. Verfahren nach einem der Ansprüche 2 bis 9, **dadurch gekennzeichnet, dass** die Primärlufttemperatur gegenüber der Umgebungslufttemperatur erhöht wird.

11. Verfahren nach einem der Ansprüche 2 bis 10, **dadurch gekennzeichnet, dass** die Primärlufttemperatur im Bereich von 110°C bis 180°C regelbar ist.

12. Verfahren nach Anspruch 1, **dadurch gekennzeichnet, dass** die Änderung der Abbrandgeschwindigkeit bzw. Abbrandintensität durch Variation des O₂-Gehaltes der Primärluft erfolgt.

13. Verfahren nach Anspruch 12, **dadurch gekennzeichnet, dass** die Variation des O₂-Gehaltes der Primärluft bei gleichbleibendem Massenstrom der Primärluft erfolgt.

14. Verfahren nach Anspruch 12 oder 13, **dadurch gekennzeichnet, dass** die Erhöhung des O₂-Gehaltes gegenüber demjenigen der Umgebungsluft durch Zuführen von reinem Sauerstoff zur Primärluft erfolgt.

15. Verfahren nach Anspruch 12 oder 13, **dadurch gekennzeichnet, dass** die Absenkung des O₂-Gehaltes gegenüber demjenigen der Umgebungsluft durch Zuführung von Stickstoff zur Primärluft erfolgt.

16. Verfahren nach Anspruch 12 oder 13, **dadurch gekennzeichnet, dass** die Absenkung des O₂-Gehaltes gegenüber demjenigen der Umgebungsluft durch Zuführung von rezirkuliertem Abgas zur Primärluft erfolgt.

## Claims

1. Method of incinerating waste products on a combustion grate having primary air feed from the underside of the combustion grate, in which the waste products are first dried and ignited, whereupon the main incineration process is carried out and then the accumulating slag is discharged, **characterized in that**, at the end of the main incineration process, where combustible proportions are still present in addition to the already forming slag proportions, the burning rate or burning intensity is slowed down below a normal level in selectable periods separated from one another by a time interval in between and is increased to or beyond the normal level in the periods in between.

2. Method according to Claim 1, **characterized in that** the slowing-down or speeding-up of the burning rate or burning intensity at the end of the main incineration process is effected by recurring variation of the primary air quantity in the burning stage decisive for the respective slag quality in the respective periods.

3. Method according to Claim 2, **characterized in that** the periods with reduced primary air quantity and the periods with normal primary air quantity for this combustion region constantly alternate with each other in a selectable ratio.

4. Method according to claim 3, **characterized in that** the two periods are in a ratio of 1:1.

5. Method according to one of Claims 1 to 4, **characterized in that** the period with reduced burning intensity or reduced primary air quantity is in a preselectable ratio to the number of grate double strokes.

6. Method according to Claim 5, **characterized in that** the number of grate double strokes per period can be regulated.

7. Method according to one of Claims 1 to 6, **characterized in that** a period of the reduced burning intensity or of the reduced primary air quantity is 3 to 6 minutes.

8. Method according to one of Claims 2 to 7, **characterized in that** the reduced primary air quantity is 50 to 70% of the normal primary air quantity.

9. Method according to one of claims 2 to 8, **characterized in that** the variation of the primary air quantity at the end of the main incineration process is neutral with respect to the primary air quantity of the entire incineration process.

10. Method according to one of Claims 2 to 9, **characterized in that** the primary air temperature is increased relative to the ambient air temperature.

11. Method according to one of Claims 2 to 10, **characterized in that** the primary air temperature can be regulated within the range of 110°C to 180°C.

12. Method according to Claim 1, **characterized in that** the burning rate or burning intensity is changed by varying the O₂ content of the primary air.

13. Method according to Claim 12, **characterized in that** the O₂ content of the primary air is varied at uniform mass flow of the primary air.

14. Method according to Claim 12 or 13, **characterized in that** the O₂ content is increased relative to that of the ambient air by feeding pure oxygen to the primary air.

15. Method according to Claim 12 or 13, **characterized in that** the O₂ content is reduced relative to that of the ambient air by feeding nitrogen to the primary air.

16. Method according to Claim 12 or 13, **characterized in that** the O₂ content is reduced relative to that of the ambient air by feeding recirculated exhaust gas to the primary air.

## Revendications

1. Procédé d'incinération de déchets sur une grille de combustion avec alimentation en air primaire depuis le côté inférieur de la grille de combustion, dans lequel les déchets sont d'abord séchés puis enflammés, et ensuite l'opération de combustion principale est effectuée puis les scories produites sont déchargées, **caractérisé en ce qu'**à la fin de l'opération de combustion principale, lorsqu'il reste encore des proportions combustibles avec des parties de scories se formant déjà, la vitesse de combustion ou l'intensité de combustion est ralentie en dessous d'une mesure normale pendant des durées sélectionnables, séparées les unes des autres par un intervalle de temps intermédiaire, et est augmentée à la mesure normale ou au-dessus pendant les intervalles de temps intermédiaires.

2. Procédé selon la revendication 1, **caractérisé en ce que** le ralentissement et l'accélération de la vitesse de combustion ou de l'intensité de combustion à la fin de l'opération de combustion principale est effectuée par une variation récurrente de la quantité d'air primaire dans le stade de combustion décisif pour la qualité des scories pendant les durées respectives.

3. Procédé selon la revendication 2, **caractérisé en ce que** les durées avec une quantité d'air primaire réduite et les durées avec une quantité d'air primaire normale pour cette plage de combustion alternent constamment dans un rapport sélectionnable.

4. Procédé selon la revendication 3, **caractérisé en ce que** les deux durées sont dans un rapport de 1:1.

5. Procédé selon l'une quelconque des revendications 1 à 4, **caractérisé en ce que** la durée d'intensité de combustion réduite ou de quantité d'air primaire réduite est dans un rapport présélectionnable par rapport au nombre de doubles levées de la grille.

6. Procédé selon la revendication 5, **caractérisé en ce que** le nombre des doubles levées de la grille peut être réglé pour chaque durée.

7. Procédé selon l'une quelconque des revendications 1 à 6, **caractérisé en ce qu'**une durée d'intensité de combustion réduite ou de quantité d'air primaire réduite dure de 3 à 6 minutes

8. Procédé selon l'une quelconque des revendications 2 à 7, **caractérisé en ce que** la quantité d'air primaire réduite constitue 50 à 70% de la quantité d'air primaire normale.

9. Procédé selon l'une quelconque des revendications 2 à 8, **caractérisé en ce que** la variation de la quantité d'air primaire à la fin de l'opération de combustion principale est neutre en quantité par rapport à l'opération de combustion totale.

10. Procédé selon l'une quelconque des revendications 2 à 9, **caractérisé en ce que** la température de l'air primaire est augmentée par rapport à la température de l'air environnant.

11. Procédé selon l'une quelconque des revendications 2 à 10, **caractérisé en ce que** la température de l'air primaire peut être réglée dans la plage de 110°C à 180°C.

12. Procédé selon la revendication 1, **caractérisé en ce que** la variation de la vitesse de combustion ou de l'intensité de combustion s'effectue par variation de la teneur en O₂ de l'air primaire.

13. Procédé selon la revendication 12, **caractérisé en ce que** la variation de la teneur en O₂ de l'air primaire s'effectue pour un débit massique constant de l'air primaire.

14. Procédé selon la revendication 12 ou 13, **caractérisé en ce que** l'augmentation de la teneur en O₂ par rapport à celle de l'air environnant s'effectue par apport d'oxygène pur à l'air primaire.

15. Procédé selon la revendication 12 ou 13, **caractérisé en ce que** la réduction de la teneur en O₂ par rapport à celle de l'air environnant s'effectue par apport d'azote à l'air primaire.

16. Procédé selon la revendication 12 ou 13, **caractérisé en ce que** la réduction de la teneur en 0₂ par rapport à celle de l'air environnant s'effectue par apport de gaz d'échappement recirculé à l'air primaire.
